# EUROPÄISCHE PATENTSCHRIFT

(11) **EP 3 557 549 B1**
(45) Veröffentlichungstag und Bekanntmachung des Hinweises auf die Patenterteilung: **21.02.2024**
(21) Anmeldenummer: 18168348.3
(22) Anmeldetag: 19.04.2018
(51) Int. Cl.: G08B 13/196, G08B 29/18, G06V 20/52, G06V 40/20, G06T 7/20

(54) **VERFAHREN ZUR BEWERTUNG EINES BEWEGUNGSEREIGNISSES**
METHOD FOR EVALUATING A MOTION EVENT
PROCÉDÉ D'ÉVALUATION D'UN ÉVÉNEMENT

(43) Veröffentlichungstag der Anmeldung: 23.10.2019
(73) Patentinhaber: PKE Holding AG, 1100 Wien (AT)
(72) Erfinder: Kloihofer, Werner, 4210 Gallneukirchen (AT); Moser, Bernhard, 4020 Linz (AT); Hoch, Thomas, 4020 Linz (AT)
(74) Vertreter: Burgstaller, Peter

(56) Entgegenhaltungen:
- WO-A1-2012/074370
- WO-A1-2017/042089
- US-A1- 2003 053 659
- STAUFFER C ET AL: "LEARNING PATTERNS OF ACTIVITY USING REAL-TIME TRACKING", IEEE TRANSACTIONS ON PATTERN ANALYSIS AND MACHINE INTELLIGENCE, IEEE COMPUTER SOCIETY, USA, vol. 22, no. 8, 1 August 2000 (2000-08-01) , pages 747-757, XP000976482, ISSN: 0162-8828, DOI: 10.1109/34.868677

## Beschreibung

Diese Erfindung betrifft ein Verfahren zur Bewertung eines Bewegungsereignisses in Bereich, welches Bewegungsereignis mittels eines Bilddaten ausgebenden Bildsensors detektiert wird, aus welchen Bilddaten eine Trajektorie eines Objektes beschreibend eine Bewegung und/oder eine Eigenschaft des bewegten Objektes im Bereich ermittelbar ist, welche Trajektorie Koordinatenwerte und Zeitwerte und/oder Eigenschaftswerte und Zeitwerte umfasst.

Unter einem Bewegungsereignis ist ein Ereignis zu verstehen, bei welchem sich eine Person und/oder ein Objekt in einem Bereich bewegt, wobei im Rahmen der Offenbarung dieser Erfindung nicht zwischen einer bewegten Person und einem bewegten Objekt unterschieden wird. Ein bewegtes Objekt kann beispielsweise ein bewegtes Fahrzeug sein.

Ein Bereich kann in Teilbereiche mittels oder ohne bauliche Maßnahmen unterteilt sein. Der Benutzer kann die Unterteilung des Bereiches in Teilbereiche frei wählen. Die Teilbereiche können einander überschneidend gewählt werden. Die Teilbereiche können weiters zeitlich veränderlich sein.

Nach dem Stand der Technik sind Verfahren zur Bewertung von ausgegebenen Alarmen bekannt.

US7262690B2 offenbart ein Verfahren, mittels welchem Verfahren ein Alarm an ein tragbares Gerät wie beispielsweise ein Handy weitergeleitet wird.

US7504942B2 beschreibt ein Verfahren mit der Möglichkeit der visuellen Verifikation eines Alarmereignisses. Der in der Patentanmeldung beschriebene Abgleich von Daten stellt keinesfalls eine visuelle Verifikation dar.

Das in US20060176167 beschriebene Verfahren zur Verifikation umfasst eine erste und eine zweite Alarmerkennung, welche abgeglichen wird und gegebenenfalls in einer Datenbank abgespeichert wird. Es findet sich in diesem Dokument kein Hinweis auf einen Abgleich eines Alarmereignisses mit einem in der Datenbank abgespeicherten Alarmereignis.

Das in US6741171B2 diskutierte Verfahren beschäftigt sich mit der sicheren Übermittlung eines Alarmsignals im Internet.

US20110254680 offenbart ein Verfahren, mittels welchem Verfahren ein potentieller Alarm validiert wird und in Abhängigkeit der Validierung des potentiellen Alarms dieser Alarm an ein nachfolgend geschaltetes Modul weitergegeben wird. Es wird hierbei das Alarmsignal mit in einer Datenbank abgespeicherten Referenzalarmen abgeglichen. Es findet sich in diesem Dokument kein Hinweis auf den Abgleich von Trajektorien von Objekten und einer hieraus abgeleiteten Verifikation eines Alarmes.

Das in US20110254680 beschriebene Verfahren ist unter Verweis auf Absatz [0065] von US20110254680 auf eine Detektion eines punktuellen Ereignisses an so genannten Alarmpunkten beschränkt. Es findet sich in diesem Dokument kein Hinweis auf eine räumliche Betrachtung, d.h. an welchem genauen Ort ein Ereignis stattgefunden hat, und auch kein Hinweis auf eine zeitliche Betrachtung des Ereignisses. US2017061255 offenbart ein Verfahren, bei welchem ein Objekt klassifiziert wird, indem eine durch eine Trajektorie beschriebene Bewegung des Objektes mit einer Referenztrajektorie der Objektklasse verglichen wird, wobei ein Ereignis detektiert wird, bei welchem Ereignis die Trajektorie von der Referenztrajektorie abweicht. Es findet sich in US201615352871 kein Hinweis auf den Abgleich der Trajektorie unter Bestimmung eines Ähnlichkeitsmaßes mit als ein Alarmereignis verifizierten Referenztrajektorien und mit als ein gewöhnliches Ereignis verifizierten Referenztrajektorien US2014112546 offenbart ähnlich zu dem oben angeführten Dokument wiederum nur den Abgleich einer Trajektorie mit einer als ein Alarmereignis verifizierten Referenztrajektorie.

In US2012237081 wird eine Trajektorie als eine normale oder abnormale Trajektorie in Abhängigkeit eines Eintrittes des Objektes in definierte Felder bewertet (siehe [026], [027], Figur 2 von US2012237081).

WO2012092148 basiert ebenso auf einer Bestimmung, ob eine detektierte Trajektorie einer normalen Situation entsprechenden (Referenz)Trajektorie entspricht (siehe [0008], [0011] von WO2012092148), wobei diese Bewertung aufgrund des Abstandes der Trajektorie zu der Referenztraj ektorie erfolgt.

Das in US2010013656 offenbarte Verfahren basiert wiederum auf der Betrachtung einer Abweichung der beobachteten Trajektorie von einer Referenztrajektorie.

US2003058111 basiert auf dem Abgleich eines Ereignisses wie beispielsweise einer Trajektorie mit einer Referenztrajektorie.

US2003053659 offenbart, dass die Trajektorie eines Objektes mit einer normalen Referenztrajektorie und einer abnormalen Referenztrajektorie verglichen wird, wobei in US2003053659 kein Hinweis zu finden ist, wie der Vergleich der Trajektorie und der Referenztrajektorie tatsächlich stattfindet. Wegen dieser mangelnden Offenbarung ist US2003053659 als kein relevanter Stand der Technik anzusehen.

Im internationalen Recherchenbericht zu US2003053659 wird US5764283 genannt, welches Dokument US5764283 ein Objekt anhand der beobachteten maximalen Bewegung als erste Komponente und anhand eines Geschwindigkeitsvektors einer Gruppe zugeordnet wird.

Der internationale Recherchenbericht zu US2003053659 umfasst weiters US5966074 als Stand der Technik, in welchem Dokument die Bewertung einer Trajektorie auf Basis des Ortes der Trajektorie, des Winkels und der Geschwindigkeit erfolgt. Es findet sich in US5966074 kein Hinweis auf die Bewertung einer Trajektorie hinsichtlich einer Zeitangabe und einer Koordinatenangabe.

In FR2872326 wird eine Situation als eine Alarmsituation bewertet, wenn diese Situation einer Klasse aus einer Vielzahl von Alarmsituationen beschreibenden Klassen entspricht.

US2016196728 basiert auf einem Abgleich einer Trajektorie mit einer Referenztrajektorie (siehe Anspruch 2 von US2016196728). Es findet sich in US2016196728 kein Hinweis auf einen Abgleich der Trajektorie mit der Referenztrajektorie in Bezug auf eine Zeitangabe der Trajektorie.

EP2899706 offenbart das punktweise Abgleichen einer Trajektorie mit einer Referenztrajektorie.

In WO2010141117A2 wird eine Traj ektorie mit nur einer Referenztraj ektorie abgeglichen.

US2017286781A1 basiert auf der Zuteilung der Trajektorie zu gewissen Clustern.

In US2013243252 ist der Abgleich einer Trajektorie mit einer Referenz erwähnt, welche Referenz einen zufälligen Spaziergang beschreibt. Es fehlt wiederum der Abgleich mit zwei Referenzen.

Das in EP1529268 beschriebene Verfahren basiert auf der Bewertung einer Trajektorie nach dem Kriterium, ob die Trajektorie aus einem Muster herausfällt.

In KR20120078415 wird wiederum eine Trajektorie mit einer Referenztrajektorie verglichen.

US2011044499 schlägt den Vergleich einer Trajektorie mit statistischen Werten vor.

In US2011043626 wird wiederum der Abgleich einer Trajektorie mit statistischen Werten offenbart.

WO2008103206 offenbart die Bewertung einer Trajektorie auf der Basis von Geschwindigkeitswerten und Beschleunigungswerten.

DE102007052763 beschreibt die Unterteilung einer Trajektorie in relevante Abschnitte und den Vergleich der Abschnitte mit einer Referenztrajektorie.

DE102006053286 erwähnt den Abgleich von Bewegungsvektoren mit einer Hauptflussrichtung, sohin im weiteren Sinn den Abgleich von Trajektorien mit Haupttrajektorien.

DE20061000494 offenbart den Abgleich von Referenzwerten eines Ereignisses mit einem Referenzereignis.

EP1350234 beschreibt den Vergleich einer Trajektorie mit Referenztrajektorien.

In US2015379357 wird wiederum eine Trajektorie mit einer Referenztrajektorie verglichen.

DE102008061910 offenbart den Vergleich einer Trajektorie mit einer Referenztrajektorie unter Anwendung der in DE102008061910 angegebenen Methoden.

US2003053659A1 offenbart nicht, dass die Trajektorie neben Koordinatenwerten über die Bewegung des Objektes auch Eigenschaftswerte wie Farbe oder Größe des Objektes umfasst.

WO20017042089 offenbart nicht die Betrachtung einer Trajektorie mit Koordinatenwerten, welche Koordinatenwerte eine Bewegung des Objektes beschreiben, und mit Eigenschaftswerten über die Form und Farbe des Objektes.

Das erfindungsgemäße Verfahren stellt sich die Aufgabe, ein zuverlässiges Verfahren zur Bewertung des Bewegungsereignisses bereitzustellen. Eine Bewertung des Bewegungsereignisses ist dass das Bewegungsereignis als ein gewöhnliches Ereignis oder als ein Alarmereignis bewertet wird.

Der grundlegende Ansatz der im Folgenden diskutierten Lösung basiert unter anderem darauf, die menschliche Beobachtung beispielsweise einer Wachperson so gut wie möglich nachzubilden. Dieser Lösungsweg schließt insbesondere ein, dass ein Ereignis unter Beobachtung des zeitlichen Verlaufes des Ereignisses beobachtet wird.

Erfindungsgemäß wird dies durch die Merkmale des Anspruchs 1 erreicht.

Eine Traj ektorie kann Koordinatenwerte und Zeitwerte zu einer hinreichend genauen Beschreibung der Position eines Objektes zu zumindest zwei Zeitpunkten umfassen. Eine derartige Trajektorie beschreibt hinreichend genau eine Bewegung eines Objektes, indem Anfangskoordinaten und ein Anfangszeitpunkt sowie Endkoordinaten und ein Endzeitpunkt angegeben werden.

Die Anfangskoordinaten und die Endkoordinaten können unterschiedlich oder gleich sein. Letzteres kann durch ein Verharren eines Objektes an einem Punkt bedingt sein, was ebenso durch eine Trajektorie beschrieben werden kann. In Bezug auf die Offenbarung des Gegenstandes der Erfindung ist dies relevant, um ein auf der Grenze zwischen dem Teilbereich und dem weiteren Teilbereich verharrendes Objekt oder ein vor oder nach oder zwischen dem Übergang zwischen den Teilbereichen in einem Teilbereich verharrendes Objekt hinreichend genau zu beschreiben.

Eine Trajektorie kann auch Angaben über die Bewegung des Objektes wie beispielsweise die Geschwindigkeit und/oder die Beschleunigung des Objektes umfassen.

Eine Trajektorie umfasst eine Angabe über zumindest eine Eigenschaft des bewegten Objektes wie Größe, Farbe et cetera des Objektes.

Eine Trajektorie, welche gemäß dem erfindungsgemäßen Verfahren zur Bewertung eines Bewegungsereignisses herangezogen wird, kann in einem vorgestellten Verfahren aus einzelnen Teiltrajektorien gebildet werden. Eine Trajektorie kann im einfachsten Fall eine mathematische Funktion sein oder durch eine Wertemenge gebildet werden. Es wird dies jedoch als ein rein mathematisches Problem angesehen, weshalb im Rahmen der Offenbarung das Ausbilden der Trajektorie durch eine Wertemenge oder durch eine Funktion als gleichwertig angesehen wird.

Die Bereichsangabe kann eine Angabe über den Eintritt und/oder die Präsenz des Objektes in einem Teilbereich sein. Die Bereichsangabe kann weiters durch die Koordinatenwerte der Trajektorie gebildet werden.

Eine Referenztrajektorie umfasst in Analogie zu obiger Definition der Trajektorie Koordinatenwerte und Zeitwerte, wobei die Zeitwerte keine absoluten Zeitangaben sein können. Es handelt sich bei den Referenzzeitwerten stets um relative Zeitangaben. Eine Referenzbereichsangabe kann weiters - wiederum in Analogie zu der obigen Beschreibung - eine Referenzeigenschaft umfassen.

Eine Referenzbereichsangabe umfasst in Analogie zu der obigen Beschreibung eine Angabe über den Eintritt eines einer Referenztrajektorie folgenden Objektes in einen Teilbereich und/oder über die Präsenz des Objektes in einem Teilbereich. Eine Referenzbereichsangabe kann durch die Referenzkoordinatenwerte der Referenztrajektorie gebildet werden.

Eine Referenztrajektorie und/oder eine Referenzeigenschaft kann über eine Messung und/oder durch eine Eingabe durch einen Benutzer gewonnen werden.

Ein Lösungsansatz des erfindungsgemäßen Verfahrens ist, dass eine Trajektorienfunktion, eine erste Referenzfunktion und eine zweite Referenzfunktion ermittelt werden und ein Ähnlichkeitsmaß beschreibend die Ähnlichkeit der Trajektorienfunktion zu der jeweiligen Referenztrajektorienfunktion durch Anwendung von Verfahren nach dem Stand der Technik ermittelt werden. Die Trajektorienfunktion und die Referenzfunktion können hierbei den zeitlichen Verlauf eines oder zweier oder dreier Koordinatenwerte beziehungsweise Referenzkoordinatenwerte oder den Verlauf der Trajektorie beziehungsweise der Referenztrajektorie unter Anwendung der gängigen Lehre hinreichend genau beschreiben.

Der Fachmann wählt die Anzahl der Koordinatenwerte und der Referenzkoordinatenwerte in Anbetracht der Aufgabenstellung zur Bewertung des Bewegungsereignisses. Eine erste Referenztrajektorie und eine zweite Referenztrajektorie können sich anhand einer charakteristischen Anzahl von Referenzkoordinatenwerten charakteristisch unterscheiden. Der Fachmann kann die Anzahl der Koordinatenwerte und der Referenzkoordinatenwerte gleich der charakteristischen Anzahl wählen.

Die Trajektorienfunktion kann beispielsweise ein Polynom n-ten Grades sein. Es kann die Trajektorienfunktion bereichsweise Polynome n-ten Grades umfassen.

Die Bestimmung des Ähnlichkeitsmaßes kann unter Anwendung der gängigen Lehre so erfolgen, dass eine erste Differenz zwischen der Trajektorienfunktion und der ersten Referenztrajektorie sowie eine zweite Differenz zwischen der Trajektorienfunktion und der zweiten Referenztrajektorien bestimmt wird. Die Trajektorie weist zu der Referenztrajektorie eine höhres Ähnlichkeitsmaß auf, zu welcher Referenztraj ektorie eine geringere Differenz bestimmt wird. Das Ähnlichkeitsmaß kann eine zeitunabhängige Größe sein.

Nachdem eine Trajektorie durch eine mathematische Funktion oder durch eine Wertemenge gebildet werden kann, kann die Bestimmung des Ähnlichkeitsmaßes durch einen Vergleich von Funktionen und/oder durch den Vergleich von Werten erfolgen. Es ist im Rahmen der Erfindung auch nicht ausgeschlossen, dass Werte mit einer Funktion verglichen werden.

Ein weiterer Lösungsansatz des erfindungsgemäßen Verfahrens basiert darauf, dass die oben beschriebene Trajektorienfunktion und/oder die Trajektorien durch einen Trajektorienparameter hinreichend genau beschrieben werden können. Der Trajektorienparameter wird unter Anwendung der Lehre der Kurvendiskussion ermittelt und umfasst eine Bereichsangabe und eine Zeitangabe.

Unter Verweis auf die gängige Definition versteht man in der Mathematik unter dem Begriff Kurvendiskussion die Untersuchung des Graphen einer Funktion auf dessen geometrische Eigenschaften. Im Rahmen der Offenbarung dieser Erfindung wird der Begriff dahingehend erweitert, dass auch vom Graphen und beispielsweise einer Achse oder vom Graphen und beispielsweise einem weiteren Graphen beschriebene Flächen sowie deren Teilflächen untersucht werden. Es kann beispielsweise ein Histogramm erstellt und berechnet werden.

Ein Histogramm kann beispielsweise die folgenden Parameter als eine Funktion über die Zeit oder einer Koordinate umfassen: Teilbereichszugehörigkeit eines Objektes, Teilbereich eines Objektpunktes, die Geschwindigkeit des Objektes, Objektgröße, Objektform wie beispielsweise Seitenverhältnis oder Orientierung, zurückgelegte Distanz, Klassenzugehörigkeit, welche über ein Klassifizierungsverfahren nach der gängigen Lehre ermittelt wird, und/oder Farbe.

Der weitere Lösungsansatz des erfindungsgemäßen Verfahrens schließt auch ein, dass die Referenzfunktionen und/oder die Referenztrajektorien jeweils durch einen Referenzparameter hinreichend genau beschrieben werden können. In Analogie zu der Ermittlung des Trajektorienparameters erfolgt die Ermittlung der Referenzparameter durch die Anwendung der gängigen Lehre der Kurvendiskussion. Der Referenzparameter umfasst sohin eine Referenzbereichsangabe und eine Referenzzeitangabe.

Mittels eines Trajektorienparameters oder eines Referenzparameters können Summenparameter der Trajektorie beziehungsweise der Referenztrajektorie wie die Durchschnittsgeschwindigkeit, zurückgelegte Distanz, Länge der Trajektorie beziehungsweise der Referenztrajektorie in Zeit oder Frames, Klassenzugehörigkeit (siehe oben), Farbeeigenschaft beschrieben werden.

Ergänzend hierzu können Informationen beschreibend die im Bereich herrschenden Wetterverhältnisse und/oder die Bildqualität in das erfindungsgemäße Verfahren aufgenommen werden.

Die Bereichsangabe und die Referenzbereichsangabe kann auch durch eine Koordinatenangabe erfolgen. Der Trajektorienparameter und der Referenzparameter können beispielsweise auf die Angabe beschränkt sein, wie lange sich das Objekt beziehungsweise ein Referenzobjekt in einem Teilbereich aufhält.

Die Bestimmung des Ähnlichkeitsmaßes kann so erfolgen, dass absolute Differenzen oder prozentuelle Differenzen zwischen dem Trajektorienparameter und dem ersten Referenzparameter (gewöhnliches Ereignis) sowie zwischen dem Trajektorienparameter und dem zweiten Referenzparameter (Alarmereignis) ermittelt werden. Das Ähnlichkeitsmaß kann eine zeitunabhängige Größe sein.

Die Bestimmung des Ähnlichkeitsmaßes der Trajektorie zu einer ersten Referenztrajektorie und zu einer zweiten Referenztrajektorie kann durch das Einführen eines Klassifikators nach dem Stand der Technik erfolgen.

Die dem Gegenstand der Erfindung zu Grunde liegende Aufgabe einer genauen Bewertung eines Bewegungsereignisses ist damit verbunden, die vorliegenden Bilddaten in einem hinreichend stabilen Verfahren aufzubereiten. Die Bilddaten, auf deren Basis das erfindungsgemäße Verfahren oder auch ein Verfahren nach dem Stand der Technik durchgeführt werden soll, sind oftmals keine fehlerfreien Daten.

Durch die erfindungsgemäße Bewertung des Bewegungsereignisses des Objektes kann die Fehlalarmquote erheblich reduziert werden. Diese Bewertung entspricht auch im Wesentlichen der subjektiven Bewertung durch eine Wachperson, die beispielsweise keinen Alarm auslöst, weil ein Objekt nur für einen zu tolerierenden Zeitraum sich verbotener Weise in einem Teilbereich aufhält.

Bei einer Bewertung eines Bewegungsereignisses als ein zu einem gewöhnlichen Ereignis ähnlicheres Ereignis wird im Regelfall kein Alarm ausgelöst. Bei einer Bewertung eines Bewegungsereignisses als ein zu einem Alarmereignis ähnlicheres Ereignis wird im Regelfall ein Alarm ausgelöst.

Das erfindungsgemäße Verfahren kann Verfahrensschritte umfassen, nach welchen Verfahrensschritten die Bilddaten vor und/oder während und/oder nach der Bewertung des Bewegungsereignisses nach einer definierten Regel bewertet werden und wobei in Abhängigkeit des Erfüllens der Regel ein Alarmsignal ausgegeben wird.

Die Bewertung der Bilddaten nach definierten Regeln kann zusätzlich zu der oben beschriebenen Bewertung des Bewegungsereignisses erfolgen, wobei die Bewertung nach Regeln als solche unter Anwendung von Verfahren nach dem Stand der Technik erfolgt, welche Verfahren mit der oben beschriebenen Bewertung der Trajektorie unter Abgleich mit einer Referenztrajektorie kombiniert werden.

Das erfindungsgemäße Verfahren kann sich dadurch auszeichnen, dass die in der Datenbank abgespeicherten Referenztrajektorien durch zumindest einen Hypergraphen beschrieben werden.

Es können durch einen Hypergraphen eine Vielzahl von Referenztrajektorien beschreiben werden. Hierdurch kann das erfindungsgemäße Verfahren insbesondere bei Vorliegen einer Vielzahl von Referenztrajektorien effektiver gestaltet werden, da die Trajektorie und/oder zumindest eine Trajektorienfunktion und/oder zumindest ein Trajektorienparameter mit dem Hypergraphen abgeglichen wird. Die Anzahl der Eingangswerte kann sohin durch die Einführung eines Hypergraphen zur Beschreibung der in der Datenbank abgespeicherten Referenztrajektorien unter Erzielung eines gleichwertigen Ergebnisses reduziert werden.

Der Benutzer kann Grenzwerte für das Ähnlichkeitsmaß einführen, ab welchen Grenzwerten eine Trajektorie als eine zu der ersten Referenztrajektorie oder zu der zweiten Referenztrajektorie hinreichend ähnliche Trajektorie angesehen wird. Dies schließt auch ein, dass eine Trajektorie, die ein einen Grenzwert unterschreitendes Ähnlichkeitsmaß zu der ersten Referenztrajektorie und/oder zu der zweiten Referenztrajektorie aufweist, als ein nicht zuordenbares Ereignis angesehen wird.

Die Detektion eines nicht zuordenbaren Ereignisses, welches durch eine Trajektorie mit einem einen Grenzwert unterschreitenden Ähnlichkeitswert zu einem gewöhnlichen Ereignis und zu einem Alarmereignis definiert ist, kann auch zu der Ausgabe eines Alarmes führen.

Der oben angeführte Abgleich unter Bestimmung des Ähnlichkeitsmaßes kann unter Anwendung von durch einen Benutzer teilweise oder zur Gänze definierten Lernverfahren unter Errechnung eines Klassifikators erfolgen. Derartige Lernverfahren sind unter den Begriffen "semi-supervised learning" beziehungsweise "supervised learning" dem Fachmann nach dem Stand der Technik bekannt.

Das erfindungsgemäße Verfahren basiert auf der Bewertung eines Bewegungsereignisses eines Objektes in einem Teilbereiche umfassenden Bereich. Der Bereich kann Sperrbereiche umfassen, in welchen Sperrbereichen eine Bewegung eines Objektes aus technischen Gründen nicht möglich ist, oder so genannte freie Teilbereiche umfassen, auf welchen freien Teilbereichen sich ein Objekt bewegen kann.

Das erfindungsgemäße Verfahren kann sich dadurch auszeichnen, dass auch die Sperrbereiche durch einen Hypergraphen beschrieben werden können, wodurch die Effektivität des erfindungsgemäßen Verfahrens weiter gesteigert werden kann.

Das erfindungsgemäße Verfahren kann sich dadurch auszeichnen, dass die Bewegungsereignisse von weiteren Objekten nicht oder mit einer unterschiedlichen Gewichtung als die Bewegung des Objektes bewertet werden. Die Auswahl der weiteren Objekte kann über zumindest eine Eigenschaft des weiteren Objektes und/oder über die Auswahl von Bildteilbereiche eines durch den Bildsensor erfassten Bildes erfolgen.

Hierdurch kann das erfindungsgemäße Verfahren im Vergleich zu Verfahren nach dem Stand der Technik wesentlich effektiver gestaltet werden, da die Trajektorien der weiteren Objekte nicht weiter beachtet werden. Beispielsweise kann die Bewegung von Blättern in einem Bereich unterhalb eines Baumes nicht beachtet werden. Weiters können Wetterereignisse wie Schnee oder Regen nicht oder mit einer anderen Gewichtung als die Bewegung des Objektes bewertet werden.

Das erfindungsgemäße Verfahren kann sich dadurch auszeichnen, dass die nicht zu bewertenden Objektereignisse ebenso durch den Hypergraphen beschrieben und in diesem enthalten sind, wodurch das Verfahren effektiver im Sinne einer Reduktion der Eingangswerte beschrieben wird.

Das Verfahren kann Teilschritte umfassen, in welchen Teilschritten die Trajektorie mit den Angaben zu den Bereichen abgeglichen wird. Eine Trajektorie, welche Trajektorie eine Bewegung in einem Sperrbereich anzeigt, kann beispielsweise als eine fehlerbehaftete Trajektorie angesehen werden.

Das erfindungsgemäße Verfahren kann umfassen, dass die mittels des Bildsensors ermittelten Bilddaten umfassend die Trajektorie und/oder weitere Bilddaten umfassend eine weitere Trajektorie, welche weiteren Bilddaten durch einen weiteren Bildsensor ermittelt werden, in der Datenbank laufend gespeichert werden.

Es kann der weitere Bildsensor weitere Bilddaten über den Bereich oder weitere Bilddaten über einen weiteren Bereich liefern.

Die die Referenztrajektorien umfassende Datenbank wird sohin laufend erweitert.

Bei einer Aufnahme des Bereiches durch den weiteren Bildsensor erfolgt die geometrische Transformation unter Berücksichtigung der Position des weiteren Bildsensors zu dem Bereich. Bei einer Aufnahme eines weiteren Bereiches durch den weiteren Bildsensor ist die geometrische Ähnlichkeit der Positionierung des Bildsensors im Bereich und der Positionierung des weiteren Bildsensors im weiteren Bereich unter Bedachtnahme der geometrischen Ähnlichkeit des Bereiches und des weiteren Bereiches bei der geometrischen Transformation zu berücksichtigen.

Die Bilddaten und/oder die weiteren Bilddaten oder die Trajektorien und/oder die weiteren Trajektorien können als ein Alarmereignis verifiziertes Ereignis oder als ein gewöhnliches Ereignis verifiziertes Ereignis in der Datenbank hinterlegt werden, um so die Datenbank laufend zu erweitern. Die Erweiterung der Datenbank ist nicht nur auf die aus Bilddaten ermittelten Trajektorien beschränkt, sondern ist im Sinne der Lösung der erfindungsgemäßen Aufgabe auf sämtliche Bilddaten anzuwenden.

Die Verifikation des Ereignisses oder die Klassifikation dieser Bilddaten und/oder dieser weiteren Bilddaten in ein gewöhnliches Ereignis oder in ein Alarmereignis kann durch einen Benutzer erfolgen.

Die Bewertung der Trajektorie kann in Abhängigkeit weiterer Sensordaten erfolgen.

Der Bereich kann neben der oben erwähnten Überwachung durch einen Bildsensor auch durch weitere Sensoren wie Zugangskontrollen et cetera überwacht werden, welche weiteren Sensoren weitere Sensordaten liefern. Durch einen Abgleich der Sensordaten mit der Trajektorie kann die Trajektorie in ein Alarmereignis oder in ein gewöhnliches Ereignis klassifiziert werden. Es sind hierbei für den Fachmann logische Korrelation oder Widersprüche zu bewerten. Die Klassifikation kann auch durch Einbeziehung der weiteren Sensordaten in das Lernverfahren erfolgen.

Der Gegenstand der Erfindung wird weiters durch die nachstehenden Figuren und dazugehörigen Figurenbeschreibungen verdeutlicht.
Figur 1 bis Figur 4 veranschaulichen das erfindungsgemäße Verfahren mittels Blockdiagrammen.
Figur 6, Figur 7 und Figur 8 veranschaulichen eine Anwendung des erfindungsgemäßen Verfahrens bei der Bewertung von Bewegungsereignissen in einem Bereich.
Figur 8 bis Figur 11 veranschaulichen eine weitere Anwendung des erfindungsgemäßen Verfahrens bei der Bewertung von Bewegungsereignissen in einem Bereich.

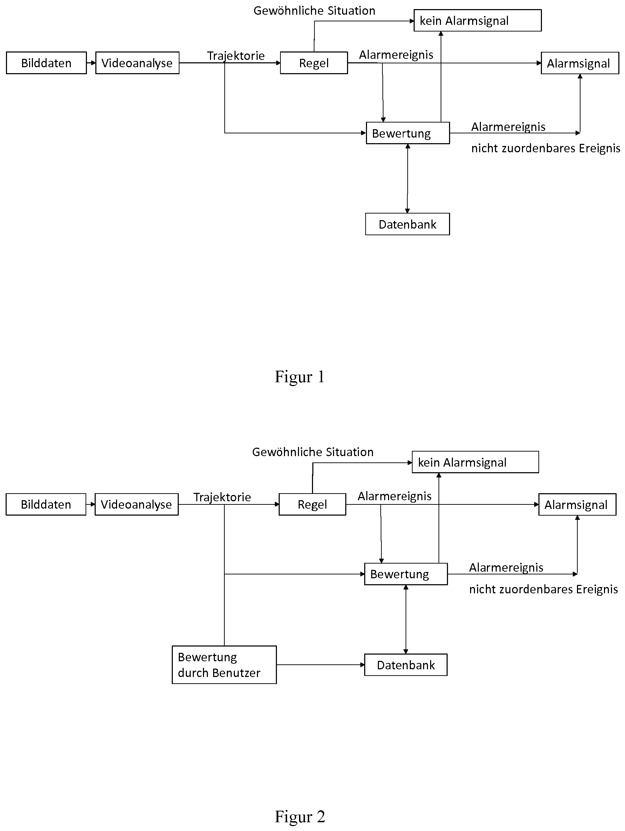

Figur 1 zeigt ein Blockdiagramm zum besseren Verständnis des erfindungsgemäßen Verfahrens. Mittels einer Kamera können Bilddaten nach Verfahren nach dem Stand der Technik ermittelt werden. Diese Bilddaten werden in einer Videoanalyse aufbereitet, sodass aus den Bilddaten durch Anwendung von Verfahren nach dem Stand der Technik eine Trajektorie umfassend Koordinatenangaben und Zeitangaben zur Beschreibung einer Bewegung eines Objektes in einem Bereich ausgegeben wird.

Die so ermittelte Trajektorie bildet die Grundlage des erfindungsgemäßen Verfahrens zur Bewertung eines Bewegungsereignisses.

Die aus den Bilddaten ermittelte Trajektorie wird durch Anwendung von Verfahren nach dem Stand der Technik in Alarmsituationen oder in gewöhnliche Situationen unterteilt. Es wird hierbei die Trajektorie mittels einfacher Regeln, welche Regeln auf das Vorkommen oder Nichtvorkommen eines Ereignisses reduziert sind, als eine Alarmsituation oder eine gewöhnliche Situation bewertet und dem entsprechend kann ein Alarm ausgelöst werden.

Das erfindungsgemäße Verfahren umfasst in Ergänzung zu den oben beschriebenen Verfahren nach dem Stand der Technik oder auch alternativ zu den oben beschriebenen Verfahren zur Bewertung eines Bewegungsereignisses nach starren Regeln die Bewertung der aus den Bilddaten ermittelten Trajektorie mittels der durch das Ähnlichkeitsmaß bestimmten größeren Ähnlichkeit zu einem gewöhnlichen Ereignis oder zu einem Alarmereignis.

Es wird die aus der Videoanalyse erhaltene Trajektorie und/oder die durch Anwendung der Bewertung mittels der starren Regeln als ein Alarmereignis bewertete Trajektorie einer Bewertung zugewiesen.

Die Trajektorie wird in der Klassifikation mit in einer Datenbank abgespeicherten Referenztrajektorien abgeglichen und ein Ähnlichkeitsmaß bestimmt. Die in der Datenbank abgespeicherten Referenztrajektorien sind als eine gewöhnliche Situation oder als eine Alarmsituation klassifiziert.

In Abhängigkeit der bewerteten Ähnlichkeit einer Trajektorie mit einer als ein gewöhnliches Ereignis oder als ein Alarmereignis klassifizierten Referenztrajektorie wird die Trajektorie als ein Alarmereignis, bei welchem Alarmereignis ein Alarmsignal ausgegeben wird, oder als ein gewöhnliches Ereignis bewertet.

Zur Bewertung einer Trajektorie als ein Alarmereignis weist die Trajektorie zu einer als ein Alarmereignis verifizierten Referenztrajektorie ein höheres Ähnlichkeitsmaß als zu einer als ein gewöhnliches Ereignis verifizierten Referenztrajektorie auf. Zur Bewertung einer Trajektorie als ein gewöhnliches Ereignis weist die Trajektorie zu einer als ein gewöhnliches Ereignis verifizierten Referenztrajektorie ein höheres Ähnlichkeitsmaß als zu einer als ein Alarmereignis verifizierten Referenztrajektorie auf.

Der Benutzer definiert weiters einen Grenzwert für ein Ähnlichkeitsmaß, ab welchem Grenzwert eine Trajektorie eindeutig als ein Alarmereignis oder als ein gewöhnliches Ereignis angesehen wird. Falls die zu bewertende Trajektorie ein den Grenzwert unterschreitendes Ähnlichkeitsmaß mit einer als ein Alarmereignis verifizierten Referenztrajektorie und ein den Grenzwert unterschreitendes Ähnlichkeitsmaß mit einer als ein gewöhnliches Ereignis verifizierten Referenztrajektorie aufweist, wird die Trajektorie als ein nicht zuordenbares Ereignis bewertet. Sicherheitshalber führt die Bewertung einer Trajektorie als ein nicht zuordenbares Ereignis auch zu einem Alarmsignal.

Figur 2 zeigt eine weitere Ausführungsform des erfindungsgemäßen Verfahrens, wobei die in Figur 2 gezeigte Ausführungsform die in Figur 1 gezeigten Verfahrensschritte umfasst. In Ergänzung zu dem oben beschriebenen erfindungsgemäßen Verfahren werden die aus der Videoanalyse ermittelte Trajektorie in der Datenbank nach einer zu vorigen Bewertung durch eine Person in der Datenbank abgespeichert. Hierdurch wird die Datenbank laufend erweitert.

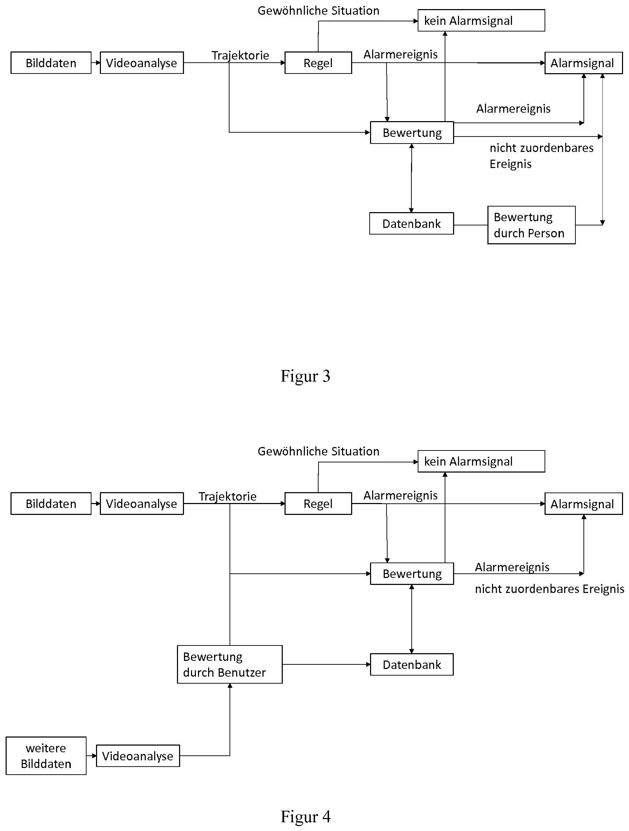

Das in Figur 3 veranschaulichte Verfahren basiert wiederum auf der in Figur 1 gezeigten Ausführungsform des erfindungsgemäßen Verfahrens. Ergänzend zu der Ausgabe eines Alarmsignales wird ein nicht zuordenbares Ereignis einer Bewertung durch eine Person zugeführt, wodurch das nicht zuordenbare Ereignis als ein Alarmereignis oder als ein gewöhnliches Ereignis bewertet wird und als solches bewertet in der Datenbank als eine Referenztrajektorie abgespeichert wird.

Die Ausgabe eines Alarmsignales bleibt dennoch erhalten, damit die Bewertung des nicht zuordenbaren Ereignisses durch eine Person nicht unter Zeitdruck erfolgen muss.

Die in Figur 4 veranschaulichte Ausführungsform des erfindungsgemäßen Verfahrens basiert auf der in Figur 2 gezeigten Ausführungsform. Zusätzlich zu den Bilddaten können beispielsweise durch eine weitere Kamera weitere Bilddaten aufgezeichnet werden, welche weiteren Bilddaten analog zu der oben beschriebenen Ausführungsform des erfindungsgemäßen Verfahrens einer Videoanalyse zugeführt werden, um so weitere Trajektorien zu erhalten. Die weiteren Bilddaten können den Bereich oder einen weiteren Bereich betreffen.

Die weiteren Trajektorien werden gleich wie die Trajektorien durch einen Benutzer als Alarmereignisse und als gewöhnliche Ereignisse verifiziert und als solche als weitere Referenztrajektorien in der Datenbank abgespeichert. Das erfindungsgemäße Verfahren in der in Figur 4 gezeigten Ausführungsform zeichnet sich dadurch aus, dass auch die weiteren Referenztrajektorien zur Bewertung der Trajektorien als ein gewöhnliches Ereignis oder als ein Alarmereignis herangezogen werden.

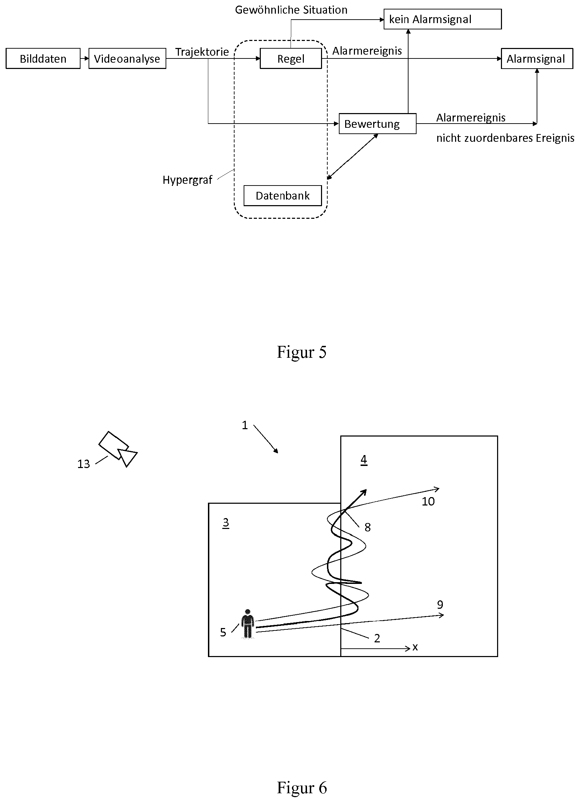

Figur 5 veranschaulicht die Verwendung eines Hypergraphen. Ein Hypergraph umfasst und beschreibt hinreichend genau bei dem in Figur 5 gezeigten Ausführungsbeispiel Regeln und die in einer Datenbank enthaltenen Daten wie beispielsweise Refernenztrajektorien oder Referenzeigenschaften. In Figur 5 ist dies durch das mit Hypergraph bezeichnete strichlinierte Feld dargestellt. Das erfindungsgemäße Verfahren ist durch das Einführen eines die Regeln und die Daten der Datenbank umfassenden Hypergraphen effizienter, weil im Rahmen der Bewertung die Trajektorie nur mit dem Hypergraphen abgeglichen werden muss.

Figur 6, Figur 7, Figur 8 und Figur 9 veranschaulichen die Anwendung des erfindungsgemäßen Verfahrens auf die Bewertung eines Bewegungsereignisses in einem in Figur 6 dargestellten Bereich 1. Der Bereich 1 umfasst einen ersten Teilbereich 3 und einen zweiten Teilbereich 4.

Die Überwachung des Bereiches 1 erfolgt über eine einen Bildsensor umfassende Kamera 6 nach dem Stand der Technik. Mittels der Kamera 6 werden nach Verfahren nach dem Stand der Technik Bilddaten generiert, aus welchen Bilddaten eine Trajektorie 8 einer sich zwischen dem ersten Teilbereich 3 und dem zweiten Teilbereich 4 bewegenden Person 5 ermittelbar sind. Die Trajektorie 8 beschreibt eine Bewegung der Person 5 zwischen dem ersten Teilbereich 3 und dem zweiten Teilbereich 4 hinreichend genau. Die Trajektorie 8 kreuzt die Grenze 2 zwischen dem ersten Teilbereich 3 und dem zweiten Teilbereich 4.

Die Trajektorie 8 umfasst gemäß obiger Definition zumindest Zeitwerte und Koordinatenwerte. Die Koordinatenwerte sind in Bereichsangaben umrechenbar.

Figur 6 umfasst weiters eine erste Referenztrajektorie 9, welche als ein gewöhnliches Ereignis verifiziert ist, und eine zweite Referenztrajektorie 10, welche als ein Alarmereignis verifiziert ist. Die Referenztrajektorien 9, 10 sind in einer Datenbank abgespeichert.

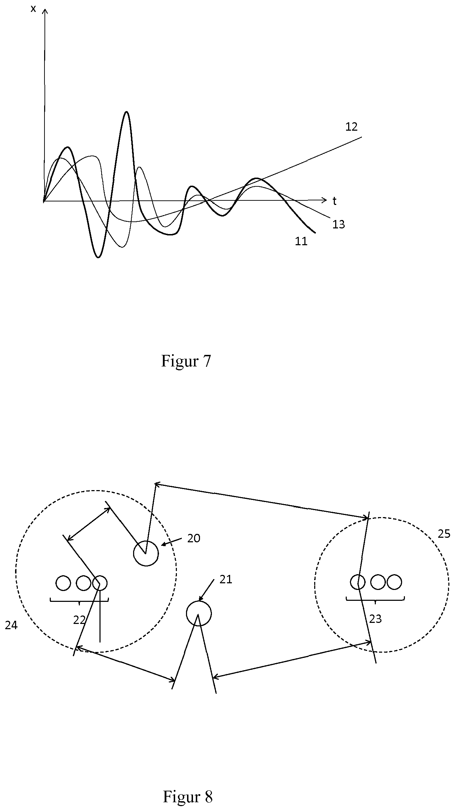

Das Diagramm in Figur 7 umfasst eine Trajektorienfunktion 11, welche Trajektorienfunktion 11 aus der Trajektorie 8 ermittelt wird, eine erste Referenzfunktion 12 und eine zweite Referenzfunktion 13. Es werden die erste Referenzfunktion und die zweite Referenzfunktion 13 aus der ersten Referenztrajektorie 9 beziehungsweise aus der zweiten Referenztrajektorie 10 ermittelt.

Zur Bewertung eines durch die Trajektorie 8 beschriebenen Bewegungsereignisses, welches Bewegungsereignis eine Bewegung der Person 5 zwischen dem ersten Teilbereich 3 und dem zweiten Teilbereich 4 umfasst, sei die Bewegung der Person 5 in die in Figur 6 eingetragene x-Richtung entscheidend. Aus diesem Grund wird aus der Trajektorie 8, der ersten Referenztrajektorie 9 und der zweiten Referenztrajektorie 10 der zeitliche Verlauf des x-Koordinatenwertes ermittelt.

Figur 7 umfasst ein Diagramm, in welchem Diagramm die Trajektorienfunktion 11, die erste Referenzfunktion 12 und die zweite Referenzfunktion 13 beschreibend die Bewegung der Person 5 beziehungsweise der Referenzperson in x-Richtung als eine Funktion der Zeit dargestellt sind.

Es ist auf der Ordinate des Diagrammes der zeitliche Verlauf der zwischen den Teilbereichen 3, 4 stattfindenden, durch die Trajektorie 8 hinreichend genau beschriebene Bewegung der Person 5 beziehungsweise die durch die Referenztrajektorien 9, 10 hinreichend genau beschriebene Referenzbewegung der in Figur 6 nicht eingetragenen Referenzperson in x-Richtung dargestellt. Die dem Diagramm von Figur 7 zu Grunde liegende Bewegung in x-Richtung ist auch in der Figur 6 eingetragen.

Bei einem negativen x-Wert befindet sich die Person 5 im ersten Teilbereich 3 und bei einem positiven x-Wert im zweiten Teilbereich 4. Das Diagramm der Figur 7 basiert sohin auf Koordinatenwerten und Zeitwerten der Bewegung.

Aus dem im Diagramm der Figur 7 enthaltenen Graphen ist ablesbar, zu welchem Zeitpunkt sich die Person 5 in welchem Teilbereich 3, 4 aufhält. Insbesondere ist aus dem Graphen ablesbar, wie weit sich die Person 5 bei ihrer Bewegung von der Grenze 2 entfernt.

Ein Lösungsansatz des erfindungsgemäßen Verfahrens basiert auf dem Vergleich der im Diagramm der Figur 7 dargestellten Trajektorienfunktion 11 mit den Referenzfunktionen 12, 13. Es können hier Verfahren nach dem Stand der Technik angewandt werden, um ein Ähnlichkeitsmaß zwischen der Trajektorienfunktion 11 und den Referenzfunktionen 12, 13 zu ermitteln.

Ein weiterer Lösungsansatz des erfindungsgemäßen Verfahrens basiert darauf, dass die in Figur 7 dargestellten Funktionen 11, 12, 13 jeweils durch einen Trajektorienparameter 20, 21 beziehungsweise durch einen Referenzparameter 22, 23 hinreichend genau beschreibbar sind. Die Trajektorienparameter 20, 21 und die Referenzparameter 22, 23 umfassen jeweils eine Bereichsangabe und eine Zeitangabe beziehungsweise eine Referenzbereichsangabe und eine Referenzzeitangabe. Die Trajektorienparameter 20, 21 und die Referenzparameter 22, 23 sind unter Anwendung der gängigen Lehre der Kurvendiskussion ermittelbar.

Figur 8 veranschaulicht eine solche Bewertung eines durch die Trajektorie 8 hinreichend beschreibbaren Bewegungsereignisses anhand von Trajektorienparametern 20, 21 und Referenzparametern 22, 23. Die Veranschaulichung der Bewertung erfolgt über ein Diagramm, wobei für den Fachmann klar ist, dass die Anwendung des erfindungsgemäßen Verfahrens keinesfalls zwingend über ein Diagramm erfolgen, sondern nur die Ähnlichkeit der zu vergleichenden Zeitangaben und Bereichsangaben beziehungsweise Koordinatenangaben betrachtet werden muss.

Es sind auf der Abszisse die Zeitangaben aufgetragen. Auf der Ordinate sind die Bereichsangaben in Form von x-Koordinatenangaben aufgetragen.

Es sind im linken Bereich des Diagramms ein erster Referenzparameter 22 von ersten Referenztrajektorien 9 und in einem rechten Bereich des Diagramms ein zweiter Referenzparameter 23 von zweiten Referenztrajektorien 10 eingetragen. Die Referenzparameter 22, 23 werden aus Referenztrajektorien 9, 10 ermittelt.

Der Trajektorienparameter 20 des Bewegungsereignisses weist einen geringeren Abstand und sohin ein höheres Ähnlichkeitsmaß zu dem ersten Referenzparameter 22 als zu dem zweiten Referenzparameter 23 auf und ist sohin als ein gewöhnliches Bewegungsereignis zu bewerten.

Der Trajektorienparameter 21 eines weiteren Bewegungsereignisses, welches in Figur 6 nicht eingetragen ist, weist einen geringeren Abstand und sohin ein höheres Ähnlichkeitsmaß zu dem ersten Referenzparameter 22 als zu dem zweiten Referenzparameter 23 auf. Der Trajektorienparameter 22 des weiteren Bewegungsereignisses liegt jedoch außerhalb der durch Linien symbolisierten Grenzwerte 24, 25, weshalb das weitere Bewegungsereignis 22 als ein nicht zuordenbares Bewegungsereignis zu bewerten ist.

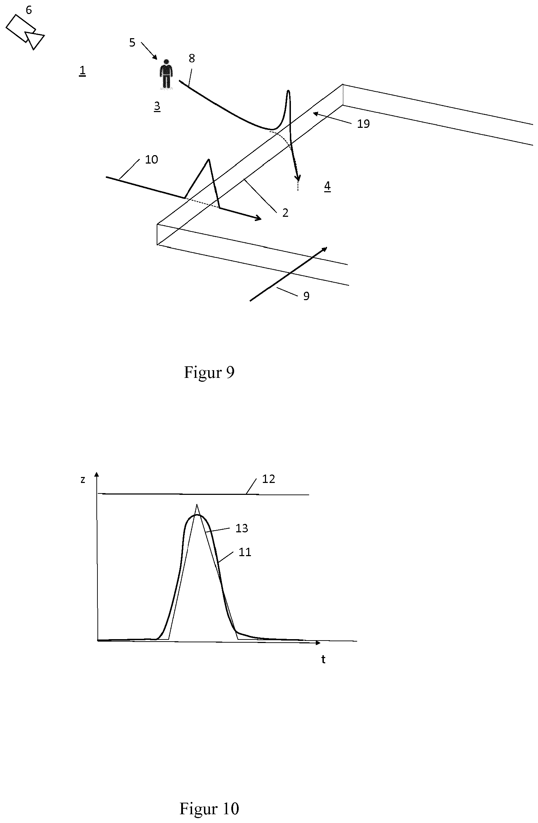

Figur 9 veranschaulicht die Anwendung des erfindungsgemäßen Verfahrens am Beispiel des in Figur 9 dargestellten Bereiches 1. Der Bereich 1 ist durch einen eine Grenze 2 ausbildenden Zaun 19 in einen ersten Teilbereich 3 und in einen zweiten Teilbereich 4 unterteilt. Es soll das erfindungsgemäße Verfahren angewandt werden, um eine durch eine Trajektorie 8 dargestellte Bewegung einer Person 5 von dem ersten Teilbereich 3 in den zweiten Teilbereich 4 zu detektieren. Es wird hierzu der Bereich 1 durch eine Kamera 6 überwacht, welche Kamera 6 einen Bildsensor zur Aufnahme von Bilddaten umfasst.

Durch Anwendung von Verfahren nach dem Stand der Technik kann aus den Bilddaten, welche eine Bewegung einer Person 5 umfassen, die Traj ektorie 8 der Person 5 ermittelt werden. Es ist Aufgabe des erfindungsgemäßen Verfahrens, das durch die Trajektorie 8 beschriebene Bewegungsereignis der Person 5 zu bewerten.

Zu einer Detektion mit einer nicht zufriedenstellenden Genauigkeit, ob eine Person 5 vom ersten Teilbereich 3 in den zweiten Teilbereich 4 gelangt ist, kann beispielsweise unter Anwendung von Verfahren nach dem Stand der Technik in den Bilddaten nach einer die Grenze 2 kreuzenden Trajektorie vom ersten Teilbereich 3 in den zweiten Teilbereich 4 gesucht werden.

Derartige Analysen nach dem Stand der Technik sind auf die Abfrage des Erfüllens einer einfachen Regel wie beispielsweise das Kreuzen der Grenze 2 durch die Trajektorie beschränkt und führen oftmals zu Fehlalarmen. Es gibt - unter Verweis auf das in Figur 9 gezeigte Ausführungsbeispiel - zu viele Möglichkeiten und dem entsprechend zu viele mögliche Trajektorien, um vom ersten Teilbereich 3 in den zweiten Teilbereich 4 zu gelangen, sodass das Ereignis des Überwindens des Zaunes 2 durch einfache Regeln sinnvoll bewertet werden kann. Eine solche Bewertung schließt auch mit ein, dass ein tatsächliches Alarmereignis aus einer Vielzahl von gewöhnlichen Ereignissen erkannt wird.

Figur 9 umfasst eine erste Referenztrajektorie 9, welche von einem in Figur 9 nicht dargestellten Vogel bestritten wird. Da jedoch gemäß oben angeführter Aufgabenstellung nur die Bewegungen von Personen oder Objekten vom ersten Teilbereich 3 in den zweiten Teilbereich 4 zu detektieren und als Alarm zu qualifizieren sind, würde die Detektion der den Zaun 2 kreuzende Trajektorie 9 des Vogels unter Anwendung einfacher Regeln einen Fehlalarm auslösen.

Die erste Referenztrajektorie 9 beschreibt j edoch - wie für den Laien erkennbar - ein gewöhnliches Bewegungsereignis. Es darf zu diesem Bewegungsereignis kein Alarm ausgelöst werden.

Figur 9 umfasst eine zweite Referenztrajektorie 10 einer über den Zaun 19 kletternden Person 5. Die zweite Referenztrajektorie 10 stellt ein außergewöhnliches Referenzereignis dar, welches als ein Alarmereignis verifiziert ist.

Es ist eine vertikale Teilbewegung charakteristisch für die Bewegung der Person 5 über den Zaun. Figur 10 umfasst ein Diagramm mit einer Trajektorienfunktion 11, welche die Abhängigkeit der Bewegung in z-Richtung der in Figur 9 eingetragenen Trajektorie 8 als eine Funktion über die Zeit darstellt, und eine erste Referenzfunktion 12 und eine zweite Referenzfunktion 13. Die erste Referenzfunktion 12 und die zweite Referenzfunktion 13 zeigen in Analogie zu der gewählten Darstellung der Trajektorienfunktion 11 die Bewegung der in Figur 9 eingetragenen Referenztrajektorien 9,10 als eine Funktion über die Zeit.

Ein Vergleich der Trajektorienfunktion 11 mit der ersten Referenzfunktion 12 und mit der zweiten Referenzfunktion 13 unter Anwendung der gängigen Lehre zeigt eindeutig, dass die Trajektorienfunktion 11 eine höheres Ähnlichkeitsmaß zu der zweiten Referenzfunktion 13 als zu der zweiten Referenzfunkton 12 aufweist. Die in Figur 9 eingetragene Trajektorie 8 ist sohin auf Basis eines solchen Vergleiches ähnlicher zu der zweiten Referenztrajektorie 10 als zu der ersten Referenztrajektorie 9 zu bewerten.

Da bei Anwendung eines ersten Lösungsansatzes des erfindungsgemäßen Verfahrens nur der zeitliche Verlauf eines Koordinatenwertes der Trajektorie 8 und der Referenztrajektorien 9, 10 betrachtet wird, ist das erfindungsgemäße Verfahren effektiver als ein nach dem Stand der Technik vorgeschlagener Vergleich der Trajektorie mit Referenztrajektorien. Das gezeigte Beispiel veranschaulicht aus Übersichtlichkeitsgründen den Vergleich einer Trajektorie 8 mit zwei Referenztrajektorien 9, 10. Die angesprochene Effektivität kommt insbesondere dann zum tragen, wenn eine Trajektorie mit einer Vielzahl von als ein gewöhnliches Ereignis oder als ein Alarmereignis verifizierten Referenztrajektorien verglichen wird.

Die Anwendung des zweiten Lösungsansatzes des erfindungsgemäßen Verfahrens basiert auf der Kurvendiskussion der Trajektorienfunktion 11 und der Referenzfunktionen 12, 13. Dieser Lösungsansatz basiert auf dem Grundgedanken, dass die Trajektorienfunktion 11 und die Referenzfunktionen 12, 13 durch Parameter 21, 22, 23 hinreichend genau und eine effektive Bewertung erlaubend beschrieben werden können.

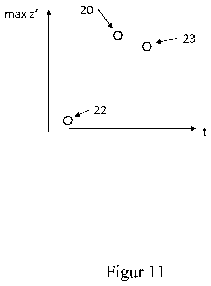

Es kann beispielsweise die maximale Steigung der Funktionen 11, 12, 13 im Rahmen einer Anwendung der gängigen Lehre der Kurvendiskussion betrachtet werden. Es ist im Diagramm von Figur 11 auf der Ordinate die maximale Steigung max z` und auf der Abszisse der Zeitwert aufgetragen.

Der im Diagramm in Figur 11 eingetragene Trajektorienparameter 20 gibt an, zu welchem Zeitpunkt die maximale Steigung z` der in Figur 10 eingetragenen Trajektorienfunktion 11 festzustellen ist. Die Referenzparameter 22, 23 geben dies in analoger Weise für die erste Referenzfunktion 12 beziehungsweise für die zweite Referenzfunktion 13 an.

Der zweite Lösungsansatz erlaubt in einer im Vergleich zum ersten Lösungsansatz gesteigerten effektiven Weise eine Bewertung des durch die Trajektorie 8 beschriebenen Bewegungsereignisses. Bei dem in Figur 11 gezeigten Vergleich werden nur einzelne Parameter verglichen.

Die oben diskutierten Ausführungsbeispiele zeigen mögliche Ausführungsvarianten der erfindungsgemäßen Verfahren, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Der Fachmann muss hierzu nicht erfinderisch tätig werden. Es wird insbesondere darauf hingewiesen, dass der Fachmann die in den Figuren veranschaulichten und in den Figurenbeschreibungen diskutierten Verfahren auch getrennt voneinander ausführen kann.

Der Fachmann kann beispielsweise die möglichen Ausführungsformen des erfindungsgemäßen Verfahrens dahingehend ergänzen, dass ein Benutzer jederzeit eine Letztbewertung des Bewegungsereignisses vornehmen kann und sohin als letzte Instanz die Bewertung des Bewegungsereignisses als ein gewöhnliches Ereignis oder als Alarmereignis vornehmen kann. Dies bedingt, dass der Benutzer die hierzu notwendigen Informationen erhält.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Verfahren zu Bestimmung von Abständen können auch durch weitere Verfahren nach dem Stand der Technik und/oder durch Anwendung der gängigen Lehre ergänzt oder ersetzt werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Bereich
- 2: Grenze
- 3: erster Teilbereich
- 4: zweiter Teilbereich
- 5: Person
- 6: Kamera
- 8: Trajektorie Person
- 9: erste Referenztrajektorie
- 10: zweite Referenztrajektorie
- 11: Trajektorienfunktion
- 12: erste Referenzfunktion
- 13: zweie Referenzfunktion
- 19: Zaun
- 20: Trajektorienparameter
- 21: weiterer Trajektorienparameter
- 22: erster Referenzparameter
- 23: zweiter Referenzparameter
- 24: Grenzwert
- 25: Grenzwert

## Patentansprüche

1. Verfahren zur Bewertung eines Bewegungsereignisses in einem Bereich,
welches Bewegungsereignis mittels eines Bilddaten ausgebenden Bildsensors detektiert wird,
**dadurch gekennzeichnet, dass**
aus den Bilddaten eine Trajektorie eines Objektes beschreibend eine Bewegung und eine Eigenschaft des bewegten Objektes im Bereich ermittelt wird,
welche Trajektorie Koordinatenwerte sowie Größe und Farbe des Objektes als Eigenschaftswerte und Zeitwerte umfasst, wobei
die Trajektorie mit einer als ein gewöhnliches Ereignis verifizierten ersten Referenztrajektorie und mit einer als ein Alarmereignis verifizierten zweiten Referenztrajektorie, welche Referenztrajektorien in einer Datenbank abgespeichert sind, unter Bestimmung eines Ähnlichkeitsmaßes abgeglichen wird,
welche Referenztrajektorien Referenzkoordinatenwerte und Referenzzeitwerte sowie Größe und Farbe eines Referenzobjektes als Referenzeigenschaften und Referenzzeitwerte umfassen, wobei eine Trajektorienfunktion beschreibend den zeitlichen Verlauf zumindest eines Koordinatenwertes sowie Größe und Farbe des Objektes als Eigenschaftswertes der Trajektorie und eine Referenzfunktion beschreibend den zeitlichen Verlauf jeweils zumindest eines Referenzkoordinatenwertes sowie Größe und Farbe des Referenzobjektes als Referenzeigenschaftswerte der Referenztrajektorien,
und/oder
zumindest ein aus der Trajektorienfunktion oder aus der Trajektorie durch Anwendung der Lehre der Kurvendiskussion ermittelter Trajektorienparameter der Trajektorie,
welcher Trajektorienparameter eine relative Zeitangabe und eine Bereichsangabe umfasst, und ein aus der jeweiligen Referenzfunktion oder der jeweiligen Referenztrajektorie durch Anwendung der Lehre der Kurvendiskussion ermittelbarer Referenzparameter der Referenztraj ektorien,
welcher Referenzparameter eine relative Referenzzeitangabe und eine Referenzbereichsangabe umfasst,
zur Bestimmung des Ähnlichkeitsmaßes verglichen werden.

2. Verfahren nach Anspruch 1, **dadurch gekennzeichnet, dass**
die in der Datenbank abgespeicherten Referenztrajektorien durch zumindest einen Hypergraphen beschrieben werden.

3. Verfahren nach einem der Ansprüche 1 bis 2, **dadurch gekennzeichnet, dass**
ein Ähnlichkeitswert zwischen der Trajektorie und der Referenztrajektorie berechnet wird, wobei bei Unterschreitung eines Grenzwertes des Ähnlichkeitsmaßes die Trajektorie als ein nicht zuordenbares Ereignis bewertet wird.

4. Verfahren nach einem der Ansprüche 1 bis 3, **dadurch gekennzeichnet, dass**
der Abgleich unter Bestimmung des Ähnlichkeitsmaßes unter Anwendung von durch einen Benutzer teilweise oder zur Gänze definierten Lernverfahren unter Errechnung eines Klassifikators erfolgt.

5. Verfahren nach einem der Ansprüche 1 bis 4, **dadurch gekennzeichnet, dass**
die Datenbank Geometrieangaben über mögliche freie Bewegungen eines Objektes, gesperrte Bewegungen eines Objektes und/oder beschränkte Bewegungen eines Objektes in dem Bereich umfasst,
wobei die Trajektorie mit den Geometrieangaben abgeglichen wird.

6. Verfahren nach einem der Ansprüche 1 bis 5, **dadurch gekennzeichnet, dass**
die Bewegungsereignisse von weiteren Objekten im erfindungsgemäßen Verfahren nicht bewertet werden.

7. Verfahren nach einem der Ansprüche 1 bis 6, **dadurch gekennzeichnet, dass**
die mittels des Bildsensors ermittelten Bilddaten umfassend die Trajektorie und/oder weitere Bilddaten umfassend eine weitere Trajektorie, welche weiteren Bilddaten durch einen weiteren Bildsensor ermittelt werden, in der Datenbank gespeichert werden.

8. Verfahren nach Anspruch 7, **dadurch gekennzeichnet, dass**
die Bilddaten und/oder die weiteren Bilddaten als ein Alarmereignis verifiziertes Ereignis oder als ein gewöhnliches Ereignis verifiziertes Ereignis in der Datenbank hinterlegt werden.

9. Verfahren nach Anspruch 8, **dadurch gekennzeichnet, dass**
die Verifikation des Ereignisses durch einen Benutzer erfolgt.

10. Verfahren nach einem der Ansprüche 1 bis 9, **dadurch gekennzeichnet, dass**
die Klassifikation der Trajektorie in Abhängigkeit weiterer Sensordaten erfolgt.

11. Verfahren nach einem der Ansprüche 1 bis 10, **dadurch gekennzeichnet, dass** aus den Bilddaten eine Trajektorie eines Objektes beschreibend eine Bewegung und/oder eine Eigenschaft des bewegten Objektes von einem ersten Teilbereich in einem zweiten Teilbereich ermittelbar ist, wobei der Bereich durch einen ersten Teilbereich und durch einen zweiten Teilbereich unterteilbar ist.

## Claims

1. A method of evaluating a movement event within an area,
which movement event is detected using an image sensor emitting image data,
**characterised in that**
a trajectory of an object describing a movement and a property of the moved object within the area is identified from the image data,
which trajectory comprises coordinate values as well as the size and colour of the object as property values and time values, wherein
the trajectory is matched with a first reference trajectory verified as a usual event and with a second reference trajectory verified as an alert event, which reference trajectories are stored in a database, under determination of a similarity measure,
which reference trajectories comprise reference coordinate values and reference time values as well as the size and colour of a reference object as reference property values and reference time values, wherein a trajectory function describing the time course of at least one coordinate value as well as the size and colour of the object as a property value of the trajectory
and a reference function describing the time course of at least one reference coordinate value as well as the size and colour of the reference object as reference property values of each of the reference trajectories
and/or
at least one trajectory parameter of the trajectory, identified from the trajectory function or from the trajectory by applying the teaching of curve sketching,
which trajectory parameter comprises a relative time specification and an area specification,
and one reference parameter of the reference trajectories, determinable from the respective reference function or the respective reference trajectory by applying the teaching of curve sketching,
which reference parameter comprises a relative reference time specification and a reference area specification,
are compared to determine the similarity measure.

2. The method of claim 1, **characterised in that**
the reference trajectories stored in the database are described by at least one hypergraph.

3. The method of any one of claims 1 and 2, **characterised in that**
a similarity measure between the trajectory and the reference trajectory is calculated, wherein, when the trajectory falls below a threshold for the similarity measure, it is assessed to be a non-attributable event.

4. The method of any one of claims 1 to 3, **characterised in that**
the matching involving determination of the similarity measure is done by applying learning methods involving the calculation of a classifier defined in part or in total by a user.

5. The method of any one of claims 1 to 4, **characterised in that**
the database comprises geometry specifications regarding potential free movements of an object, locked movements of an object and/or limited movements of an object within the area,
wherein the trajectory is matched with the geometry specifications.

6. The method of any one of claims 1 to 5, **characterised in that**
the movement events of further objects are not assessed in the inventive method.

7. The method of any one of claims 1 to 6, **characterised in that**
the image data comprising the trajectory as identified using the image sensor and/or further image data comprising a further trajectory, which further image data is identified by a further image sensor, is/are stored in the database.

8. The method of claim 7, **characterised in that**
the image data and/or the further image data is/are deposited in the database as an event verified as an alert event or as an event verified as a usual event.

9. The method of claim 8, **characterised in that**
verification of the event is done by a user.

10. The method of any one of claims 1 to 9, **characterised in that**
classification of the trajectory is done depending on further sensor data.

11. The method of any one of claims 1 to 10, **characterised in that**
a trajectory of an object describing a movement and/or a property of the moved object from a first partial area is identifiable from the image data in a second partial area, wherein the area can be divided into a first partial area and a second partial area.

## Revendications

1. Méthode d'évaluation d'un événement de mouvement dans une zone,
ledit événement de mouvement étant détecté au moyen d'un capteur d'image qui sort des données d'image,
**caractérisée en ce qu'**une trajectoire d'un objet décrivant un mouvement et une propriété de l'objet en mouvement dans la zone est déterminée à partir des données d'image,
ladite trajectoire comprenant des valeurs de coordonnées ainsi que la taille et la couleur de l'objet en tant que valeurs de propriété et valeurs de temps,
ladite trajectoire étant comparée à une première trajectoire de référence vérifiée comme un événement ordinaire et à une deuxième trajectoire de référence vérifiée comme un événement d'alarme pour déterminer une mesure de similitude, lesdites trajectoires de référence étant stockées dans une base de données,
lesdites trajectoires de référence comprenant des valeurs de coordonnées de référence et des valeurs de temps de référence ainsi que la taille et la couleur d'un objet de référence en tant que propriétés de référence et valeurs de temps de référence,
une fonction de trajectoire décrivant l'évolution dans le temps d'au moins une valeur de coordonnée ainsi que la taille et la couleur de l'objet en tant que valeur de propriété de la trajectoire
et une fonction de référence décrivant l'évolution dans le temps d'au moins une valeur de coordonnée de référence ainsi que la taille et la couleur de l'objet de référence comme valeurs de propriété de référence des trajectoires de référence
et/ou
au moins un paramètre de trajectoire de la trajectoire déterminé à partir de la fonction de trajectoire ou de la trajectoire par application de la discussion des courbes,
ledit paramètre de trajectoire comprenant une indication de temps relative et une indication de zone,
et un paramètre de référence des trajectoires de référence, qui peut être déterminé à partir de la fonction de référence respective ou de la trajectoire de référence respective par application de la discussion des courbes,
ledit paramètre de référence comprenant une indication de temps de référence relative et une indication de zone de référence,
sont comparés pour déterminer la mesure de similitude.

2. Méthode selon la revendication 1, **caractérisée en ce que** les trajectoires de référence stockées dans la base de données sont décrites par au moins un hypergraphe.

3. Méthode selon l'une des revendications 1 à 2, **caractérisée en ce qu'**une valeur de similitude entre la trajectoire et la trajectoire de référence est calculée, la trajectoire étant évaluée comme un événement non attribuable si une valeur limite de la mesure de similitude n'est pas atteinte.

4. Méthode selon l'une des revendications 1 à 3, **caractérisée en ce que** la comparaison est effectuée en déterminant la mesure de similitude en utilisant des procédures d'apprentissage qui sont partiellement ou totalement définies par un utilisateur et qui servent à calculer un classificateur.

5. Méthode selon l'une des revendications 1 à 4, **caractérisée en ce que** la base de données comprend des informations géométriques sur les mouvements libres possibles d'un objet, les mouvements bloqués d'un objet et/ou les mouvements limités d'un objet dans la zone, la trajectoire étant comparée aux données géométriques.

6. Méthode selon l'une des revendications 1 à 5, **caractérisée en ce que** les événements de mouvement d'autres objets ne sont pas évalués dans la méthode selon l'invention.

7. Méthode selon l'une des revendications 1 à 6, **caractérisée en ce que** les données d'image déterminées au moyen du capteur d'image comprenant la trajectoire et/ou d'autres données d'image comprenant une autre trajectoire sont stockées dans la base de données, lesdites autres données d'image étant déterminées par un autre capteur d'image.

8. Méthode selon la revendication 7, **caractérisée en ce que** les données d'image et/ou les autres données d'image sont stockées dans la base de données en tant qu'événement vérifié comme événement d'alarme ou en tant qu'événement vérifié comme événement ordinaire.

9. Méthode selon la revendication 8, **caractérisée en ce que** la vérification de l'événement est effectuée par un utilisateur.

10. Méthode selon l'une des revendications 1 à 9, **caractérisée en ce que** la classification de la trajectoire s'effectue en fonction d'autres données de capteurs.

11. Méthode selon l'une des revendications 1 à 10, **caractérisée en ce qu'**une trajectoire d'un objet décrivant un mouvement et/ou une propriété de l'objet déplacé d'une première zone partielle dans une deuxième zone partielle peut/peuvent être déterminée/s à partir des données d'image, la zone pouvant être subdivisée par une première zone partielle et par une deuxième zone partielle.
